# EUROPEAN PATENT APPLICATION

(11) **EP 4 671 958 A1**
(43) Date of publication of application: **31.12.2025**
(21) Application number: 25184791.9
(22) Date of filing: 24.06.2025
(51) Int. Cl.: G06F 3/12

(54) **IMAGE FORMING APPARATUS, CONTROL METHOD FOR THE SAME, AND STORAGE MEDIUM**

(30) Priority: 27.06.2024 JP 2024104356
(71) Applicant: CANON KABUSHIKI KAISHA, Tokyo 146-8501 (JP)
(72) Inventor: MIYOSHI, Tomoya, Tokyo, 146-8501 (JP)
(74) Representative: TBK

(57) **Abstract**

The image forming apparatus capable of communicating with a cloud print server system including a cloud print service, the image forming apparatus comprising: one or more memory devices that store a set of instructions; and one or more processors that execute the set of instructions to: display a two-dimensional code including identification information by which the image forming apparatus can be identified, and receive information relating to the two-dimensional code set in the cloud print service, wherein control of whether or not to display the two-dimensional code is performed based on the information relating to the two-dimensional code, and the two-dimensional code is used by the cloud print server system to identify the image forming apparatus and transmit a saved print job.

## Description

### TECHNICAL FIELD

The present disclosure relates to an image forming apparatus, a control method for the same, and a storage medium.

### BACKGROUND

In recent years, cloud printing systems have begun to become more widespread (Japanese Patent Laid-Open No. 2012-133489 and Japanese Patent Laid-Open No. 2023-183237). In Japanese Patent Laid-Open No. 2012-133489, a user uses a terminal to select a printing apparatus registered in a cloud print service (CPS) as an output destination and transmit a print job to the CPS. Then, upon receiving the print job, the CPS transfers the print job to the selected printing apparatus. Then, the printing apparatus executes printing based on the transferred print job. Japanese Patent Laid-Open No. 2023-183237 proposes a technology that acquires a cloud printer ID of a printing apparatus by reading a QR code (registered trademark) displayed on the printing apparatus, and performs pull printing on the printing apparatus by associating the cloud printer ID with a print job.

### SUMMARY

It is conceivable that when a printing apparatus is registered in the CPS, a QR code capable of identifying the registered printing apparatus among printing apparatuses registered in the CPS is automatically displayed on the operation screen of the printing apparatus. In such a case, a user who wishes to print using this printing apparatus loads this QR code and requests a job release to the CPS. However, if the setting for using QR codes in the CPS is disabled, print jobs that the user has previously transmitted to the CPS are not retained, and are transmitted as-is to another printing apparatus (hereinafter referred to as direct printing). Accordingly, no job is released in the CPS and no print processing occurs. Accordingly, the pull printing function is not provided.

The present disclosure enables the realization of a new mechanism that allows a user to print a print target as desired in a system that allows print jobs to be retained.

The present disclosure in its first aspect provides an image forming apparatus as specified in claim 1. Optional features are specified in claim 2 to 8.

The present disclosure in its second aspect provides a method for controlling an image forming apparatus as specified in claim 9.

The present disclosure in its third aspect provides a non-transitory computer-readable storage medium storing a program for causing a computer to execute each step of a control method for an image forming apparatus as specified in claim 10.

Features of the present disclosure will become apparent from the following description of embodiments with reference to the attached drawings. The following description of embodiments is described by way of example.

### BRIEF DESCRIPTION OF THE DRAWINGS

FIG. 1 is a schematic diagram of a printing system according to an embodiment.
FIG. 2 is a sequence diagram of a printing system according to an embodiment.
FIGS. 3A and 3B are diagrams showing screen information generated by a CPS according to an embodiment.
FIGS. 4A to 4C are diagrams showing a screen of a printing apparatus according to a comparative example.
FIG. 5 is a diagram showing a block configuration of printing system according to an embodiment.
FIGS. 6A to 6D are diagrams showing a screen of a printing apparatus according to an embodiment.
FIG. 7 is a flowchart showing a processing procedure in a printing apparatus according to an embodiment.
FIG. 8 is a sequence diagram of a printing system according to an embodiment.
FIG. 9 is a flowchart showing a processing procedure in a CPS according to an embodiment.
FIG. 10 is a flowchart showing a processing procedure in a printing apparatus according to an embodiment.
FIG. 11 is a sequence diagram of a printing system according to an embodiment.
FIG. 12 is a flowchart showing a processing procedure in a printing apparatus according to an embodiment.
FIG. 13 is a diagram showing screen information generated by a CPS according to an embodiment.
FIG. 14 is a diagram showing a screen of a printing apparatus according to an embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the ease that all such features are required, and multiple such features may be combined as appropriate. Furthermore, in the attached drawings, the same reference numerals are given to the same or similar configurations, and redundant description thereof is omitted.

In this specification, the term "printing apparatus" broadly includes apparatuses that form (record) images on a recording material (recording medium), such as single-function printers, copiers, multifunction devices, and commercial printing machines. In addition, the printing apparatus may be a system (image forming system) in which a main body of a printing apparatus that forms an image on a recording material is connected to devices such as a sheet processing apparatus and a sheet feeding apparatus.

### First Embodiment

### Network Configuration

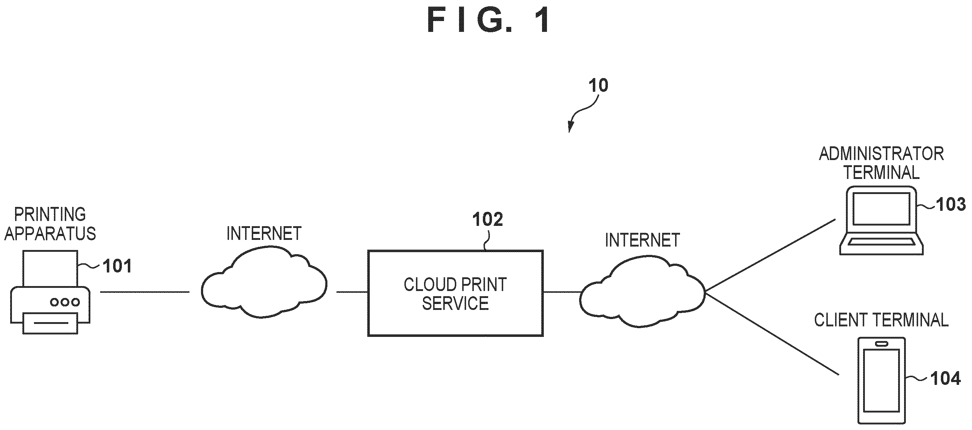

First, a configuration of a printing system 10 according to the present disclosure will be described with reference to FIG. 1. The printing system 10 according to this embodiment includes a printing apparatus 101, a cloud print service (hereinafter also referred to as a CPS) 102, an administrator terminal 103, and a client terminal 104. Note that the printing system 10 is an example of an "image forming system". In addition, the printing apparatus 101 is an example of an "image forming apparatus".

The printing apparatus 101 communicates with the CPS 102 on the Internet via a network. The network may be constituted by combining, for example, communication networks such as LAN and WAN, cellular networks (e.g., LTE and 5G, etc.), and wireless networks conforming to IEEE 802.11. That is, the network need only be able to transmit and receive data, and any communication method may be adopted for the physical layer. The administrator terminal 103 and the client terminal 104 also communicate with the CPS 102 on the Internet via a communication network or a cellular network. Also, the printing apparatus 101 communicates with the CPS 102, the administrator terminal 103, or the client terminal 104 in accordance with a standard such as PWG 5100.18, RFC 3995, or RFC 3996 of the Internet Printing Protocol (IPP). Alternatively, the printing apparatus 101 communicates with the CPS 102, the administrator terminal 103, or the client terminal 104 via Graph API.

The printing apparatus 101 has a scanning function for transmitting data based on an image read using a scanner to an external device, a printing function for printing an image on a sheet such as paper based on a print job received from an external device, and a copying function. That is, the printing apparatus 101 can receive a print job via the CPS 102 and perform printing.

In this embodiment, a multi-function peripheral (MFP) having a plurality of functions is given as an example of the printing apparatus, but there is no limitation to this. For example, the printing apparatus may be a single-function peripheral (SFP) having only a printing function. In addition, in this embodiment, printing on a sheet such as paper is given as an example, but there is no limitation to this, and this embodiment can be applied also to printing control in 3D printing or the like, in which a three-dimensional object is formed based on three-dimensional shape data.

The CPS 102 receives print jobs from client terminals such as the client terminal 104 and stores the print jobs. Thereafter, if the CPS 102 receives a job release request, the CPS 102 notifies the printing apparatus 101 registered in the CPS 102 that the print job has been submitted. Upon receiving the notification, the printing apparatus 101 acquires the print job and starts printing.

### Block Configuration of Printing System 10

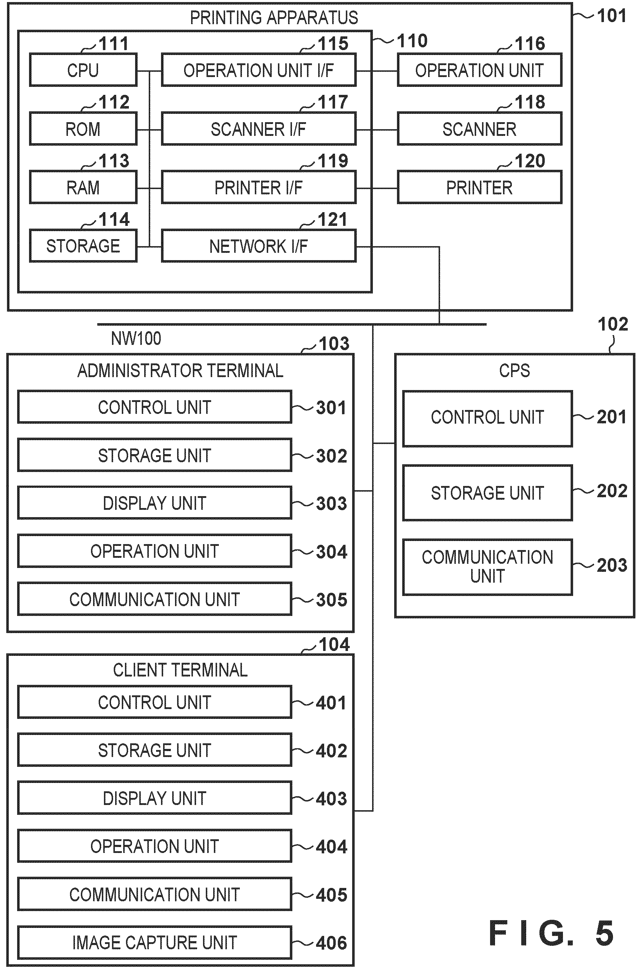

The functional blocks of each apparatus included in the printing system 10 will be described with reference to FIG. 5.

### Block Configuration of Printing Apparatus 101

The printing apparatus 101 has a reading function for reading an image on a sheet, a file transmission function for transmitting the read image to an external communication device, and the like. The printing apparatus 101 also has a printing function for printing images on sheets. The printing apparatus 101 also has a function of receiving and printing a print job from the CPS 102, the above-mentioned user management function, and a retained printing function.

The printing apparatus 101 includes a control unit 110 (an example of "controlling display and reception") and an operation unit 116 (an example of "displaying information including identification information capable of identifying the image forming apparatus"). The printing apparatus 101 also includes a scanner 118 and a printer 120. The control unit 110 includes a central processing unit (CPU) 111, a ROM 112, a RAM 113, a storage 114, an operation unit I/F 115, a scanner I/F 117, a printer I/F 119, and a network I/F 121. Note that the network I/F 121 is an example of "communicating with the outside of the image forming apparatus". The control unit 110 controls the overall operation of the printing apparatus 101.

The CPU 111 reads out a control program stored in the Read Only Memory (ROM) 112 or the storage 114, and performs various types of control such as print control and read control. The ROM 112 stores a control program executable by the CPU 111. The Random Access Memory (RAM) 113 is a main memory accessed by the CPU 111, and is used as a work area or a temporary storage region for deploying various control programs. The storage 114 stores print jobs, image data, various programs, and various types of setting information. In this manner, the hardware such as the CPU 111, the ROM 112, the RAM 113, and the storage 114 constitutes a so-called computer.

Note that in the printing apparatus 101, one CPU 111 uses one memory (RAM 113) to execute each process shown in a flowchart described below, but each process may be executed in another manner. For example, a plurality of processors, memories, and storages can also cooperate to execute each process shown in the flowchart described below. Also, some of the processing may be executed using hardware circuits.

The printer I/F (interface) 119 connects the printer 120 (printer engine) and the control unit 110. The printing apparatus 101 generates a print image and a print control command to be transferred to the printer 120 based on the print job. The printer 120 prints an image on a sheet fed from a paper feed cassette (not shown) based on a print image and print control commands input via the printer I/F 119. Note that the printing method may be an electrophotographic method in which toner is transferred to paper and fixed thereon, or an inkjet method in which printing is performed by ejecting ink onto paper.

The scanner I/F 117 connects the scanner 118 and the control unit 110. The scanner 118 reads a document placed on a document stand (not shown) and generates image data. The image data generated by the scanner 118 is printed by the printer 120, stored in the storage 114, or transmitted to an external device via the network I/F 121.

The operation unit I/F 115 connects the operation unit 116 and the control unit 110. The operation unit 116 is provided with a liquid crystal display unit having a touch panel function, various physical keys, and the like. The operation unit 116 functions as a display unit that displays information to the user and a reception unit that receives instructions from the user. The CPU 111 cooperates with the operation unit 116 to control the display of information and to control the acceptance of user operations.

The network I/F 121 includes a communication module and is connected to a network cable. The printing apparatus 101 can communicate with external devices on a network (NW) 100 and the Internet via this network I/F 121. Note that in this embodiment, it is assumed that the network I/F 121 is a communication interface that performs wired communication conforming to Ethernet (registered trademark), but there is no limitation to this. For example, the network I/F 121 may be a wireless communication interface conforming to the IEEE 802.11 series. Also, both may be wireless communication interfaces. It may also be a communication interface for mobile communications such as a 3G line such as CDMA, a 4G line such as LTE, or a 5G line such as NR.

### Block Configuration of CPS 102

The CPS 102 is a computer having a processor such as a CPU, a main storage device such as a ROM or a RAM, an auxiliary storage device such as a hard disk drive, and a communication module such as a network interface card (NIC) or a wireless circuit. The auxiliary storage device stores an operating system (OS), various programs, various types of table-format information, and the like. The stored program is then loaded into the work region of the main memory device and executed, and each component or the like is controlled through the execution of the program, thereby realizing each function corresponding to a later-described predetermined purpose.

The CPS 102 includes a control unit 201, a storage unit 202, and a communication unit 203. The control unit 201 includes a processor or a CPU, and executes various controls in the CPS 102. The storage unit 202 includes a main storage device such as a ROM or a RAM, and an auxiliary storage device such as a hard disk drive. The communication unit 203 includes a communication module such as a NIC or a wireless circuit, and is connected to the NW 100, for example, to communicate with various servers and information terminals on the network.

### Block Configuration of Administrator Terminal 103

The administrator terminal 103 is a computer having a processor such as a CPU, a main storage device such as a ROM or a RAM, an auxiliary storage device such as a hard disk drive, and a communication module such as a NIC or a wireless circuit. The auxiliary storage device stores an operating system (OS), various programs, various types of table-format information, and the like. The stored program is then loaded into the work region of the main memory device and executed, and each component or the like is controlled through the execution of the program, thereby realizing each function corresponding to the later-described predetermined purpose.

The administrator terminal 103 includes a control unit 301, a storage unit 302, a display unit 303, an operation unit 304, and a communication unit 305. The control unit 301 includes a processor and executes various controls in the administrator terminal 103. The storage unit 302 includes a main storage device such as a ROM or a RAM, and an auxiliary storage device such as a hard disk drive. The display unit 303 includes a display and displays information on the display. The operation unit 304 includes a display having a touch panel function, various physical keys, and the like, and functions as a reception unit that receives instructions from the user. The communication unit 305 includes a communication module, and is connected to the NW 100, for example, to communicate with various servers and information terminals on the network.

### Block Configuration of Client Terminal 104

The client terminal 104 is a computer having a processor such as a CPU, a main storage device such as a ROM or a RAM, an auxiliary storage device such as a hard disk drive, a communication module such as a NIC or a wireless circuit, and a camera module. The auxiliary storage device stores an operating system (OS), various programs, various types of table-format information, and the like. The stored program is then loaded into the work region of the main memory device and executed, and each component or the like is controlled through the execution of the program, thereby realizing each function corresponding to the later-described predetermined purpose.

The client terminal 104 includes a control unit 401, a storage unit 402, a display unit 403, an operation unit 404, a communication unit 405, and an image capture unit 406. The control unit 401 includes a processor and executes various controls in the client terminal 104. The storage unit 402 includes a main storage device such as a ROM or a RAM, and an auxiliary storage device such as a hard disk drive. The display unit 403 includes a display and displays information on the display. The operation unit 404 includes a display having a touch panel function, various physical keys, and the like, and functions as a reception unit that receives instructions from the user. The communication unit 405 includes a communication module, and is connected to the NW 100, for example, to communicate with various servers and information terminals on the network. The image capture unit 406 includes a camera module and processes captured images.

### Overview of Sequence Processing of Printing System 10

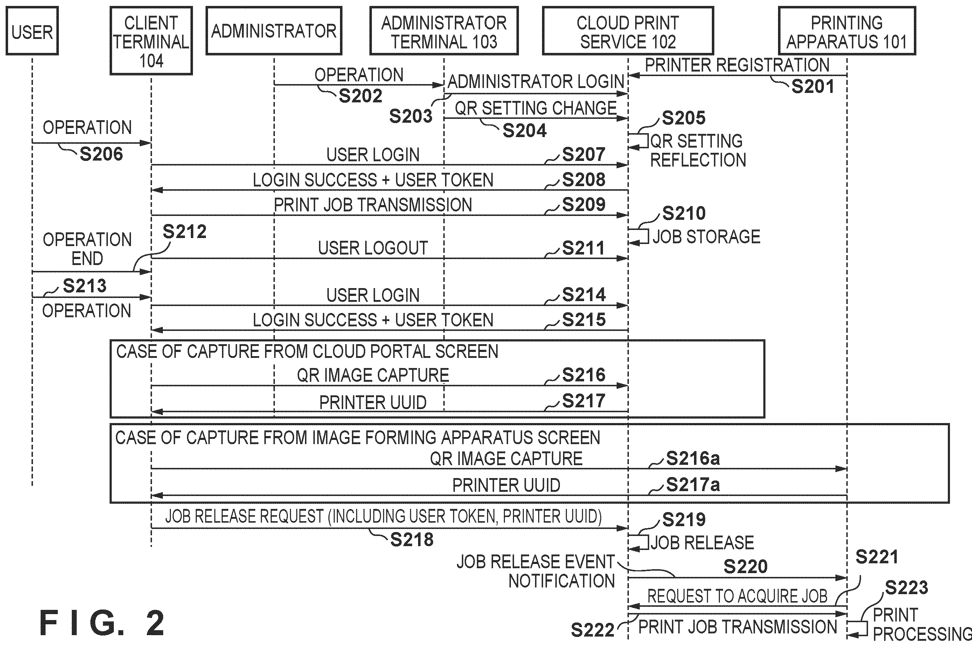

An overview of the sequence processing of the printing system 10 will be described with reference to FIG. 2. Note that the sequence processing in FIG. 2 is realized by, for example, the CPU 111 of the printing apparatus 101 reading out a program stored in the ROM 112 into the RAM 113 and executing the program. This sequence processing is realized, for example, by the control unit 201 of the CPS 102 reading out and executing a program stored in the storage unit 202. This sequence processing is realized, for example, by the control unit 301 of the administrator terminal 103 reading out and executing a program stored in the storage unit 302. This sequence processing is realized, for example, by the control unit 401 of the client terminal 104 reading out and executing a program stored in the storage unit 402.

First, the difference between Japanese Patent Laid-Open No. 2023-183237 and this embodiment with respect to the sequence of pull printing using a QR code (a two-dimensional barcode, an example of a "barcode") will be described. The disclosure disclosed in Japanese Patent Laid-Open No. 2023-183237 includes a virtual printer. Then, when the portable communication device reads the QR code, the job is selected and the job moves from a logical printer corresponding to the virtual printing apparatus to the actual physical printer associated with the logical printer. On the other hand, in this embodiment, a logical printer is not provided, and when the client terminal 104 reads the QR code as shown in FIG. 2, a job release request is performed on the CPS 102. Then, the CPS 102 transmits the print job to the actual physical printer (printing apparatus 101).

As shown in FIG. 2, in step S201, the CPU 111 of the printing apparatus 101 transmits a printer registration request to the CPS 102 via the network I/F 121. In this example, the printer to be registered is the printing apparatus 101 itself. In the CPS 102, the control unit 201 receives this request via the communication unit 203 and registers the printing apparatus 101 with a service provided by the printing system 10. Note that the service is, for example, a pull print service. Registration indicates storing, in the storage unit 202, for example, information such as identification information for the control unit 201 of the CPS 102 to identify the printing apparatus 101 that can use the pull print service.

In step S202, the operation unit 304 of the administrator terminal 103 accepts a login operation by the administrator. In step S203, the control unit 301 transmits a login request to the CPS 102 via the communication unit 305 according to the login operation. In step S204, the control unit 301 transmits a request to change the setting of "use QR code" to the CPS 102 via the communication unit 305 in response to an operation by the administrator. In step S205, the control unit 201 of the CPS 102 accepts this change request via the communication unit 203, and actually changes the setting of "use QR code". Then, the control unit 201 stores the changed setting information in the storage unit 202. In the example shown in FIG. 2, the "use QR Code" setting has been changed from OFF to ON.

In step S206, the operation unit 404 of the client terminal 104 accepts a login operation by the user. In step S207, the control unit 401 transmits a login request to the CPS 102 via the communication unit 405. In step S208, the control unit 201 of the CPS 102 authenticates the login request. If the authentication is successful, the control unit 201 of the CPS 102 transmits a message indicating that the login request has been successful to the client terminal 104 via the communication unit 203. In addition, the control unit 201 transmits the user token to the client terminal 104 via the communication unit 203. The user token includes, for example, user identification information, and is information indicating that the user has been authenticated. In step S209, the operation unit 404 of the client terminal 104 accepts an operation to upload a print job to the CPS 102 from the user. Then, the control unit 401 transmits the print job to the CPS 102 via the communication unit 405.

In step S210, the control unit 201 of the CPS 102 receives a print job via the communication unit 203. Then, the control unit 201 determines whether or not the setting of the "use QR code" in the CPS 102 is ON. If it is determined that this setting is ON, the control unit 201 stores this print job in association with user information in the storage unit 202. Note that the user information is information including identification information of the currently logged-in user, such as a user ID received from the client terminal 104 when the user logs in. In step S211, the operation unit 404 of the client terminal 104 accepts a logout operation by the user. Then, the control unit 401 transmits a logout request to the CPS 102 via the communication unit 405. Then, the operation by the user temporarily ends (step S212).

In step S213, the operation unit 404 of the client terminal 104 accepts the user's login operation again. In step S214, the control unit 401 transmits a login request to the CPS 102 via the communication unit 405. In step S215, the control unit 201 of the CPS 102 authenticates this login request, and transmits the fact that the login request has been successful to the client terminal 104 via the communication unit 203. In addition, the control unit 201 transmits a user token to the client terminal 104 via the communication unit 203. The client terminal 104 then receives this user token.

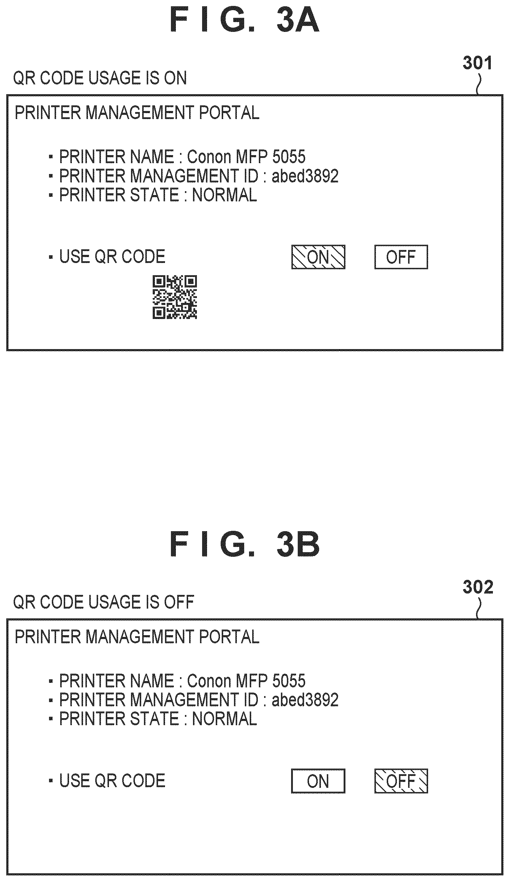

In step S216, the control unit 401 of the client terminal 104 receives printer management screen information (e.g., see FIGS. 3A and 3B) from the CPS 102 via the communication unit 405, and reads the QR code information included in this screen information. In step S217, the control unit 401 acquires the identification information of the printer, for example, a universally unique identifier (UUID), from the information represented by the QR code information. The printer management screen information is screen information created by the control unit 201 of the CPS 102 in response to a user logging in, and includes QR code generation information capable of encoding, into a QR code, the identification information of the printer that the logged-in user is permitted to use. The association between a user and a printer that the user is allowed to use may be based on, for example, a tenant, which is an example of a management unit for a cloud print service, and a printer managed by the same tenant as the user may be a printer that the user is allowed to use. Of course, this is just one example, and users and printers may be associated with each other in smaller management units.

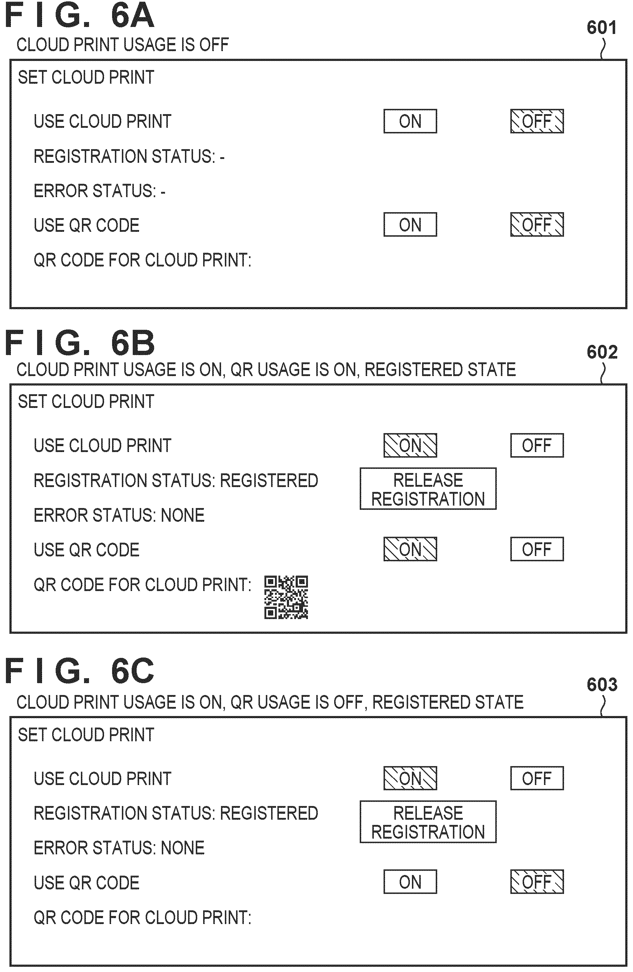

Alternatively, in step S216a, the control unit 401 of the client terminal 104 may capture an image of a QR code (e.g., later-described FIG. 6B) displayed on the display of the printing apparatus 101 via the image capture unit 406. In this case, in step S217a, the control unit 401 acquires the printer UUID from the information included in the QR code.

In step S218, the control unit 401 transmits a job release request including this printer UUID and the information of the user token received in step S215 to the CPS 102 via the communication unit 405. Here, the user token indicates that the release request was made by an authenticated user with authority. In step S219, the control unit 201 of the CPS 102 receives this job release request via the communication unit 203 and executes the job release. Note that the job release refers to identifying a print job that the control unit 201 has stored in the storage unit 202 using the user token received in step S218, for example, and releasing the reservation setting for this print job.

The print job reservation setting here is, for example, a setting for each print job, and is a setting for reserving a print job uploaded from the client terminal 104 in the CPS 102. For print jobs uploaded from the client terminal 104, the reservation setting may be set to ON (i.e., the setting for reserving in the CPS 102) as a default setting, for example. Note that when a plurality of print jobs uploaded by the user relating to the release request are reserved in the CPS 102, a list of the target print jobs is transmitted from the CPS 102 to the client terminal 104 such that the user can select one. The selected print job may then be a target of job release. Alternatively, all print jobs uploaded by the user relating to the release request may be a target of job release.

In step S220, via the communication unit 203, the control unit 201 performs notification of a job release event to the printing apparatus 101 identified by the printer UUID received together with the job release request. In step S221, the CPU 111 of the printing apparatus 101 receives this event notification via the network I/F 121. Then, the CPU 111 requests the CPS 102 to acquire the print job via the network I/F 121. In step S222, the control unit 201 of the CPS 102 receives, via the communication unit 203, a request to acquire this print job. Then, the control unit 201 transmits the print job for which the reservation setting has been released, to the printing apparatus 101 via the communication unit 203. In step S223, the CPU 111 of the printing apparatus 101 receives this print job via the network I/F 121. The CPU 111 then causes the printer 120 to execute print processing via the printer I/F 119.

FIGS. 6A to 6D are examples of images displayed on operation screens (601 to 604) of the printing apparatus 101. The operation screens (601 to 604) display "use cloud print" (an example of "service availability information"). In addition, the operation screens (601 to 604) display the current state (ON or OFF) of "use QR code" (an example of "first information that is information relating to a display setting of identification information" and "second information"). Also, the operation screens (601 to 604) respectively display icons by which "use cloud print" and "use QR code" can be set to either ON or OFF. Note that the "ON" icon for "use cloud print" being lit up is an example of "service use enabled", and the "OFF" icon being lit up is an example of "service use disabled". The setting values corresponding to the settings of "use cloud print" and "use QR code" may be stored in, for example, the storage 114 or the like of the printing apparatus 101. Regarding the registration status, when the printer registration in step S201 of FIG. 2 is successful, information indicating that the printer has been registered may be stored in, for example, the storage 114 or the like.

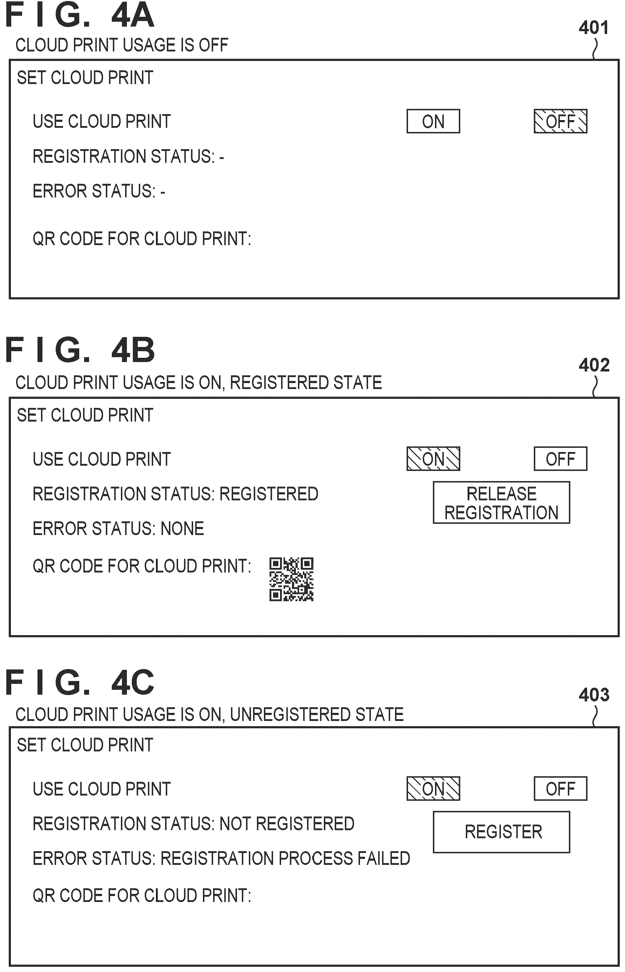

In addition, the operation screens (601 to 604) display the registration status of the printing apparatus 101 in the CPS 102 (an example of "service availability information"). Here, the operation screens (601 to 604) according to the first embodiment and the operation screens of the printing apparatus of FIGS. 4A to 4C according to a comparative example will be compared. Thus, it can be understood that the operation screens (601 to 604) according to the first embodiment is newly provided with setting icons for the current state and the ON/OFF state of "use QR code". Note that the comparative example is based on FIG. 15 of Japanese Patent Laid-Open No. 2023-183237, and the like.

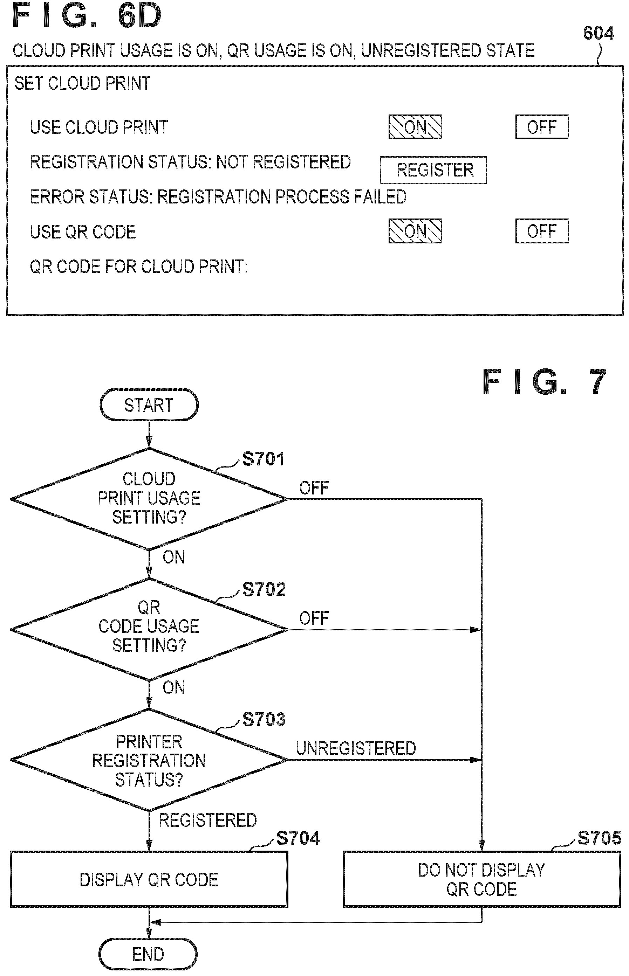

When "use cloud print" is OFF as in FIG. 6A, the QR code is not displayed on the operation screen 601. In FIG. 6A, "use QR code" is OFF, but even if this setting is ON, the QR code is not displayed on the operation screen 601. Also, as shown in FIG. 6B, if "use cloud print" is ON and "use QR code" is ON, the printing apparatus 101 is properly registered in the CPS 102, and cloud printing can be performed normally, then a QR code is displayed on the operation screen 602. As shown in FIG. 6C, when "use cloud print" is ON and "use QR code" is OFF, the QR code is not displayed on the operation screen 603 regardless of the registration status in the CPS 102. As shown in FIG. 6D, if "use cloud print" and "use QR code" are ON, but the printing apparatus 101 is not properly registered in the CPS 102 for some reason, the QR code is not displayed on the operation screen 604.

Note that the screens in FIGS. 6A to 6D are merely examples, and the screen that displays the QR code does not need to be the same screen as the screen for selecting the setting value. For example, the QR code may be displayed on a login screen for a user to log into the printing apparatus 101 using an IC card or the like, or the QR code may be displayed on the top screen of the printing apparatus 101 after login.

FIG. 7 is an example of a flowchart of display control by the CPU 111 of the printing apparatus 101, which realizes control of the display of the QR code as shown in, for example, FIGS. 6A to 6D above. The processing described below is realized, for example, by the CPU 111 reading out a program stored in the ROM 112 into the RAM 113 and executing the program. Note that the procedure in FIG. 7 is processing particularly relating to the display control of the QR code, and regarding widgets on the UI screen other than the QR code, widgets corresponding to predetermined text or setting values need only be displayed. For example, after displaying a widget other than the QR code shown in FIGS. 6A to 6D, the procedure of FIG. 7 is executed. Alternatively, the remaining widgets may be displayed after the procedure shown in the drawings.

In step S701, the CPU 111 checks the setting of "use cloud print". If the setting is OFF, the processing proceeds to step S705. Then, in step S705, the CPU 111 does not display the QR code on the operation screen (FIG. 6A). On the other hand, if the setting is ON, the processing proceeds to step S702.

In step S702, the CPU 111 checks the setting of "use QR code". If the setting is OFF, the processing proceeds to step S705. In step S705, the CPU 111 does not display the QR code on the operation screen as described above (FIG. 6C). On the other hand, if the setting is ON, the processing proceeds to step S703.

In step S703, the CPU 111 checks whether or not the printing apparatus 101 is properly registered in the CPS 102 and is in a state in which printing is possible. If the CPU 111 determines that the printing apparatus 101 is not properly registered in the CPS 102 and is in a state in which printing is not possible (an example of a case in which the service cannot be used), the processing proceeds to step S705. In step S705, the CPU 111 does not display the QR code on the operation screen as described above (FIG. 6D). Note that in this case, the CPU 111 does not display the QR code on the operation screen, regardless of whether the setting of "use QR code" is ON or OFF. On the other hand, if the CPU 111 determines that the printing apparatus is properly registered in the CPS 102 and is in a state in which printing can be performed, the processing proceeds to step S704. In step S704, the CPU 111 displays a QR code on the operation screen (FIG. 6B). Then, the processing of this flowchart ends.

### Operations and Effects

According to the printing system 10 described above, as shown in step S702 of FIG. 7, one of the conditions for displaying a QR code on the operation panel is that the setting of "use QR code" is ON. Accordingly, even if the setting of "use QR code" is OFF, the QR code is prevented from being automatically displayed on the operation panel. This prevents the user from having a misunderstanding regarding whether or not pull printing is possible.

In addition, according to the printing system 10 as described above, for example, an administrator can check the setting of "use QR code" in the CPS 102 via the administrator terminal 103 (step S203). Thereafter, the administrator can operate the setting icon for "use QR code" displayed on the operation screen of the printing apparatus 101. Accordingly, for example, if the setting of "use QR code" is set to ON in the CPS 102 and is set to OFF in the printing apparatus 101, the administrator can switch the setting of "use QR code" in the printing apparatus 101 to ON by operating the operation screen of the printing apparatus 101. In such a case, a QR code is displayed on the operation screen of the printing apparatus 101. Here, the user transmits a print job to the CPS 102 via the client terminal 104 (step S209), and photographs the QR code displayed on the operation screen of the printing apparatus 101 (step S216). Then, since the print job is reserved in the CPS 102 (step S210), in step S223, this print job is printed by the printing apparatus 101 on which the QR code is displayed (pull printing).

On the other hand, if the setting of "use QR code" is set to OFF in the CPS 102 and is set to ON in the printing apparatus 101, for example, the administrator operates the operation screen of the printing apparatus 101. Then, the setting of "use QR code" in the printing apparatus 101 can be switched to OFF. In such a case, the QR code is not displayed on the operation screen of the printing apparatus 101. Accordingly, the print job transmitted to the CPS 102 thereafter is not reserved in the CPS 102 (step S209). This job is transmitted as-is to the printing apparatus 101 (hereinafter, also referred to as direct printing).

According to this disclosure, the setting of "use QR Code" in the CPS 102 is manually coordinated with the setting of "use QR code" in the printing apparatus 101. This prevents the user from having a misunderstanding regarding whether or not pull printing is possible. Accordingly, the user can print the print target as desired.

In addition, such a disclosure can be applied to management operations that prevent the setting of "use QR code" from being changed automatically. Accordingly, the printing system 10 can be introduced into many companies because it can accommodate a variety of policies.

### Second Embodiment

In the second embodiment, in addition to the processing in the first embodiment, a mechanism for controlling synchronization of the setting of "use QR code" between the printing apparatus 101 and the CPS 102 will be described. Note that the hardware configuration of each apparatus in the second embodiment is similar to that in the first embodiment. The following mainly describes the differences between the first and second embodiments.

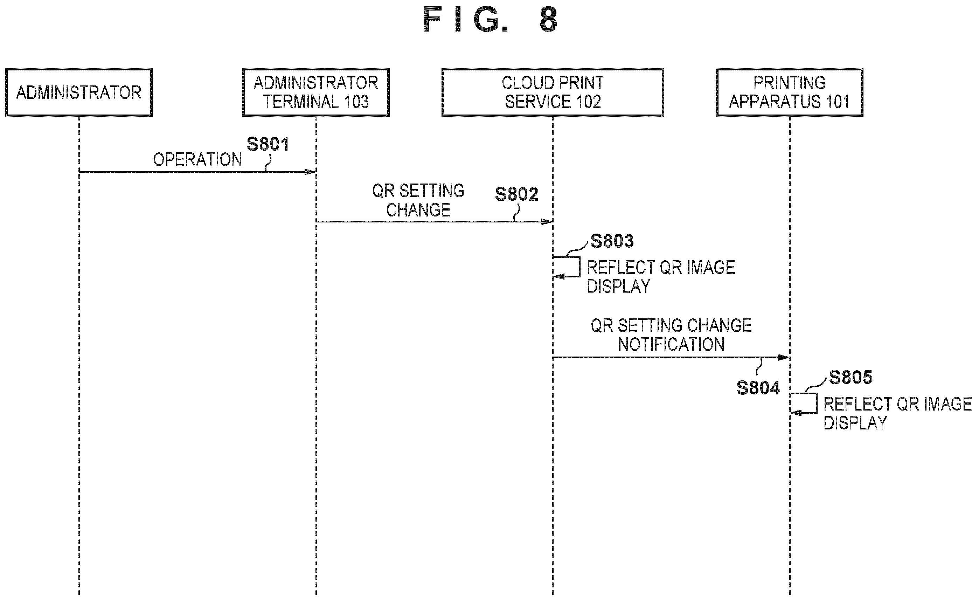

FIG. 8 shows an example of the details of the sequence processing in the printing system 10 according to the second embodiment. The processing described below is realized, for example, by the CPU 111 of the printing apparatus 101 reading out a program stored in the ROM 112 into the RAM 113 and executing the program. Also, the processing described below is realized by, for example, the control unit 201 of the CPS 102 reading out and executing a program stored in the storage unit 202. Also, the processing described below is realized by, for example, the control unit 301 of the administrator terminal 103 reading out and executing a program stored in the storage unit 302. Also, the processing described below is realized by, for example, the control unit 401 of the client terminal 104 reading and executing a program stored in the storage unit 402.

In the printing system 10 according to the second embodiment, a change of the setting of "use QR code" in the CPS 102 is notified to the printing apparatus 101. Then, the printing apparatus 101 controls the change of this setting synchronously. More specifically, in step S801, the operation unit 304 of the administrator terminal 103 accepts an operation to change the setting of "use QR code" from the administrator, for example. In step S802, the control unit 301 transmits a request for changing this setting to the CPS 102 via the communication unit 405. Note that the change of the setting includes changing the state of "use QR code" from ON as shown on the screen of FIG. 3A to OFF as shown on the screen of FIG. 3B. The change of the setting also includes a reverse change in the state of "use QR code" from OFF to ON.

In step S803, the communication unit 203 of the CPS 102 receives a request to change the setting. Then, the control unit 201 detects a request to change the setting. Then, the control unit 201 changes the setting of "use QR code" according to the change content. Then, the control unit 201 causes the storage unit 202 to store the changed setting information. By changing the setting in this way, for example, if the control unit 301 of the administrator terminal 103 accesses the CPS 102 via the communication unit 305, the control unit 301 can acquire, from the CPS 102, image information reflecting the setting change. Then, the control unit 301 can cause the display unit 303 to display the image information reflecting the setting change.

In step S804, the control unit 201 of the CPS 102 notifies the printing apparatus 101 via the communication unit 203 that the setting of "use QR code" has been changed. In step S805, the CPU 111 of the printing apparatus 101 receives the change content via the network I/F 121. Then, the CPU 111 updates the setting of "use QR code" in the printing apparatus 101 stored in the storage 114, for example, to the received change content. Furthermore, the CPU 111 controls the display of the QR code displayed on the operation screen of the printing apparatus 101 in accordance with the notified change content. For example, if the setting of "use QR code" is changed from OFF to ON, the CPU 111 lights up the "ON" setting icon of "use QR code" as shown in FIG. 6C to FIG. 6B, and displays the QR code. On the other hand, if the setting of "use QR code" is changed from ON to OFF, the CPU 111 lights up the "OFF" setting icon of "use QR code" as shown in FIG. 6B to FIG. 6C, and does not display the QR code. In this way, the setting of "use QR code" is synchronized between the CPS 102 and the printing apparatus 101.

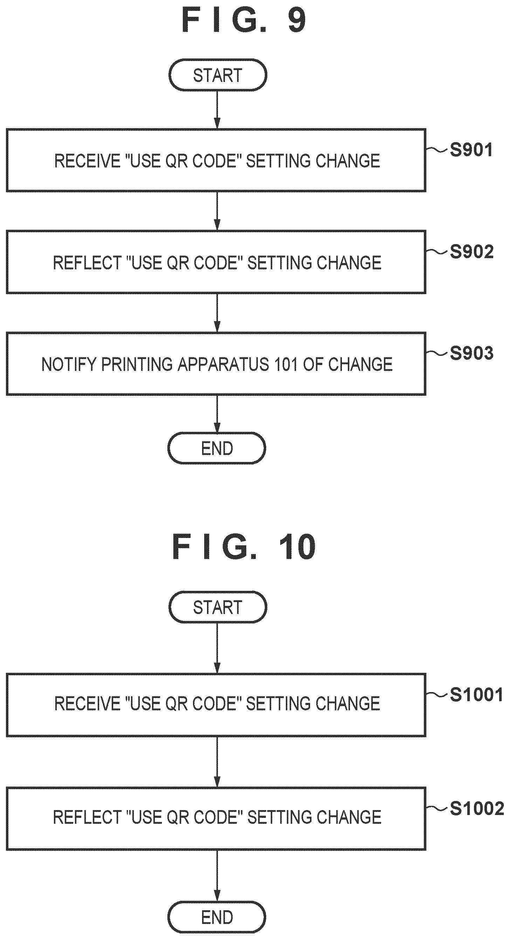

FIG. 9 is an example of a flowchart in the CPS 102 that enables execution of the sequence processing as shown in FIG. 8. The processing described below is realized, for example, by the control unit 201 reading out and executing a program stored in the storage unit 202. In step S901, the control unit 201 detects, via the communication unit 203, reception of a request to change the setting of "use QR code".

In step S902, the control unit 201 reflects the received change. That is, the control unit 201 changes the setting of "use QR code" according to the change content. Then, the control unit 201 stores the changed setting information in the storage unit 202. In step S903, the control unit 201 notifies the printing apparatus 101 of the change of the setting of "use QR code" via the communication unit 203. Then, the processing of this flowchart ends. Note that the processing in FIG. 9 may be started when an operation for storing the setting value of "use QR code" is performed on the client terminal 104 and a request for storing the setting value is received from the client terminal 104.

FIG. 10 is an example of a flowchart in the printing apparatus 101 that enables the sequence processing as shown in FIG. 8. The processing described below is realized, for example, by the CPU 111 reading out a program stored in the ROM 112 into the RAM 113 and executing the program. In step S1001, the CPU 111 receives a change of the setting of "use QR code" via the network I/F 121. This processing corresponds to step S903 in FIG. 9.

In step S1002, the CPU 111 stores the change content in the storage 114, for example. In addition, the CPU 111 controls the display of the QR code displayed on the operation screen of the printing apparatus 101 in accordance with the notified change content. For this purpose, for example, the processing of FIG. 7 shown in the first embodiment may be performed. Then, the processing of this flowchart ends.

Note that the change notification from the CPS 102 to the printing apparatus 101 may be made using the IPP protocol or a graph API. In addition, the timing of the notification may be in real time since the CPS 102 and the printing apparatus 101 are constantly connected. Also, the timing of the notification may be such that the printing apparatus 101 polls the CPS 102 at regular intervals to check whether or not a setting event for "use QR code" has occurred, and notification may be given when a setting event is detected. Also, instead of using polling processing, the printing apparatus 101 may irregularly request the CPS 102 to check whether or not a setting event for "use QR code" has occurred, and receive this change from the CPS 102 if there has been a change in the setting for "use QR code".

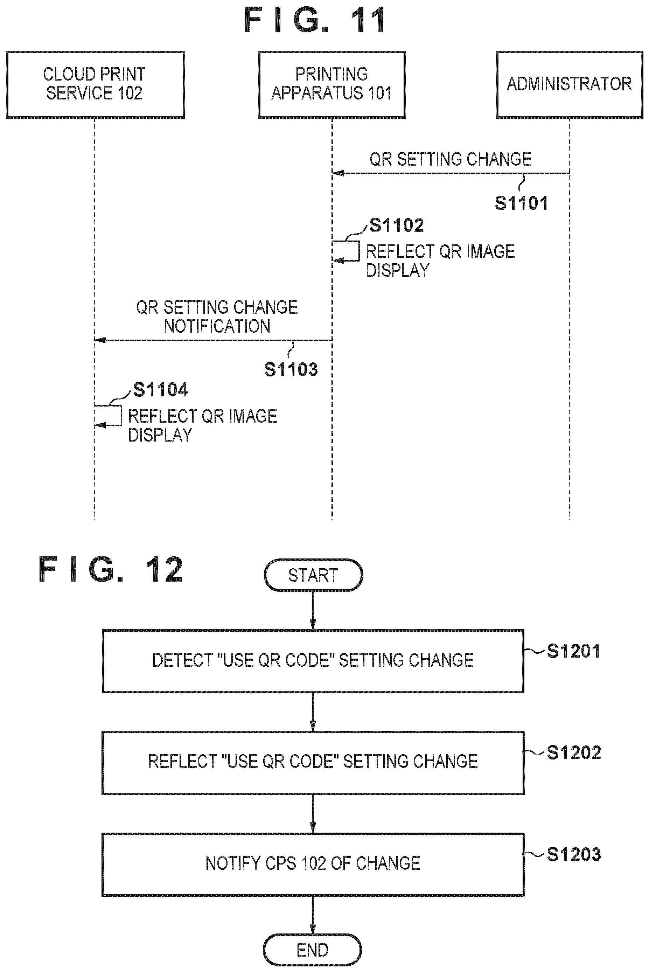

FIG. 11 shows another example of sequence processing in the printing system 10 according to the second embodiment. That is, FIG. 11 differs from FIG. 8 in that first, the printing apparatus 101 accepts a change of the setting of "use QR code". Then, the setting change is transmitted to the CPS 102, and the setting of "use QR code" in the CPS 102 is changed.

The processing described below is realized, for example, by the CPU 111 reading out a program stored in the ROM 112 into the RAM 113 and executing the program. Also, for example, this is realized by the control unit 201 reading out and executing a program stored in the storage unit 202. Also, for example, this is realized by the control unit 301 reading out and executing a program stored in the storage unit 302. Also, for example, this is realized by the control unit 401 reading out and executing a program stored in the storage unit 402.

In step S1101, the CPU 111 of the printing apparatus 101 accepts an operation to change the setting of "use QR code" via the operation unit I/F 115. In step S1102, the CPU 111 changes the setting of "use QR code" in accordance with the change content. Then, the CPU 111 stores the change content in the storage 114. In addition, the CPU 111 controls the lighting of the setting icon for "use QR code" that is displayed on the display in response to this setting change, and the display of the QR code. In step S1103, the CPU 111 notifies the CPS 102 via the network I/F 121 that the setting of "use QR code" has been changed.

In step S1104, the communication unit 203 of the CPS 102 receives this change of setting. Then, the control unit 201 changes the setting of "use QR code" according to the change content. The control unit 201 then stores the changed setting information in the storage unit 202. By changing the setting in this way, for example, if the control unit 301 of the administrator terminal 103 accesses the CPS 102 via the communication unit 305, the control unit 301 can acquire, from the CPS 102, image information reflecting the setting change. Then, the control unit 301 can cause the display unit 303 to display the image information reflecting the setting change. Note that after transmitting the changed settings to the CPS 102, if the printing apparatus 101 does not receive a response indicating that the transmission or the update of the settings in the CPS 101 was successful, the printing apparatus 101 may return the display to the state before the change.

Accordingly, for example, if the "use QR code" setting is changed from ON to OFF, the CPS 102 lights up the "OFF" setting icon for "use QR code" as shown in FIG. 3B, and can generate image information in which the QR code is not displayed. On the other hand, in the case of a notification in which the setting of "use QR code" has been changed from OFF to ON, the CPS 102 lights up the "ON" setting icon of "use QR code" as shown in FIG. 3A, and can generate the image information with the QR code displayed. In this manner, the setting of "use QR code" is automatically synchronized between the printing apparatus 101 and the CPS 102.

FIG. 12 is an example of a control flowchart of the CPU 111 of the printing apparatus 101 that enables the sequence processing in FIG. 11. The processing described below is realized, for example, by the CPU 111 reading out a program stored in the ROM 112 into the RAM 113 and executing the program.

In step S1201, the CPU 111 accepts an operation to change the setting of "use QR code" via the operation unit I/F 115. If a setting change is detected, the processing proceeds to step S1202, and if not, this determination is repeated. In step S1202, the CPU 111 changes the setting of "use QR code" in accordance with the change content. Then, the CPU 111 stores the change content in the storage 114. In addition, the CPU 111 controls the lighting of the setting icon for "use QR code" that is displayed on the display in response to this setting change, and the display of the QR code. In step S1203, the CPU 111 notifies the CPS 102 via the network I/F 121 that the setting of "use QR code" has been changed. Then, the processing of this flowchart ends. Note that the control flow of the CPS 102 that enables the sequence processing in FIG. 11 may be the same as that in FIG. 10.

### Operations and Effects

According to the disclosure of the second embodiment, for example, the user can touch the setting icon for "use QR code" displayed on the operation screen of the printing apparatus 101 to change it from OFF to ON. In such a case, the setting of "use QR code" in the CPS 102 is automatically synchronized to ON. In such a case, a QR code is displayed on the operation screen of the printing apparatus 101. Here, the user transmits a print job to the CPS 102 via the client terminal 104 (step S209), and photographs the QR code displayed on the operation screen of the printing apparatus 101 (step S216). Then, the print job is reserved in the CPS 102 (step S210). Accordingly, when the user photographs the QR code displayed on the operation screen of the printing apparatus 101 (step S216), in step S223, this print job is printed by the printing apparatus 101 on which the QR code is displayed (pull printing).

Also, for example, an administrator can first operate the setting of "use QR code" in the CPS 102 via the administrator terminal 103 to change it from OFF to ON. In such a case as well, the setting of "use QR code" in the CPS 102 is automatically synchronized to ON. Accordingly, the user can perform pull printing.

Also, for example, the setting icon for "use QR code" displayed on the operation screen of the printing apparatus 101 can be touched to change it from ON to OFF. In such a case, the QR code will no longer be displayed on the operation screen of the printing apparatus 101. In such a case, the setting of "use QR code" in the CPS 102 is automatically synchronized to OFF. Accordingly, the print job transmitted to the CPS 102 thereafter is not reserved in the CPS 102 (step S209). This job is directly printed by the printing apparatus 101 as is. Note that the same applies when "use QR code" in the CPS 102 is first changed from ON to OFF.

According to this disclosure, the setting of "use QR code" in the CPS 102 is automatically coordinated with the setting of "use QR code" in the printing apparatus 101. This prevents the user from having a misunderstanding regarding whether or not pull printing is possible. According to such a printing apparatus 101, the user can print the print object as desired.

### Third Embodiment

In the third embodiment, the control up to the point of notifying the change of the setting of "use QR code" in the second embodiment is the same (steps S804 and S1103). However, in the third embodiment, the control in which the CPS 102 or the printing apparatus 101 that has received the notification does not synchronize the setting change but notifies the administrator that a change has occurred is different from the second embodiment.

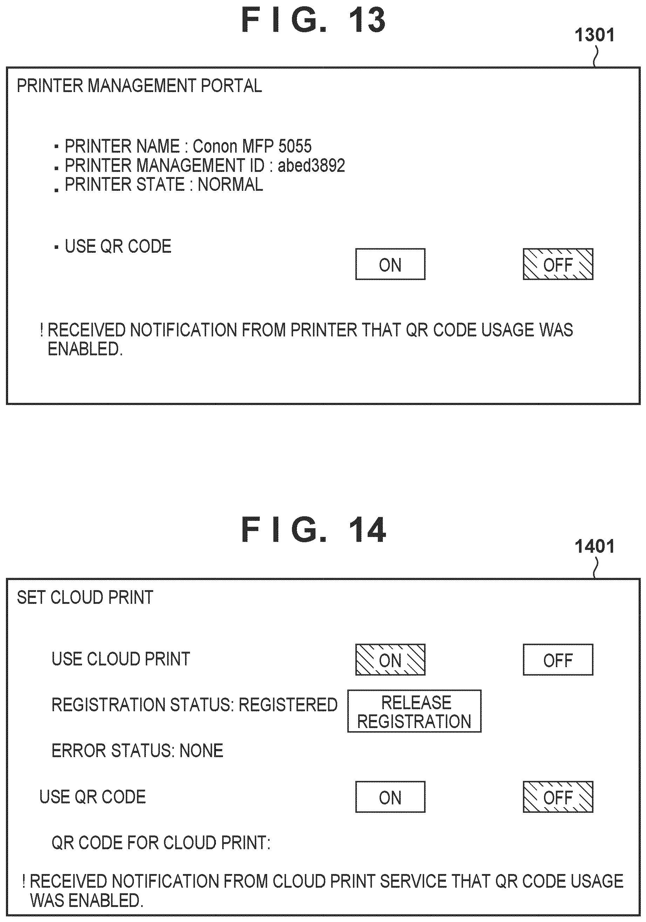

For example, when an administrator changes the setting of "use QR code" of the printing apparatus 101 to ON, the control unit 201 of the CPS 102 receives a notification of the change of the setting of "use QR code" from the printing apparatus 101 via the communication unit 203, as in step S1103. However, the control unit 201 does not change the setting of "use QR code" in the CPS 102, and does not store this setting change in the storage unit 202. The control unit 201 keeps the OFF icon of "use QR code" lit up in the CPS 102 as shown in FIG. 13, and generates image information that does not include a QR code but includes a message that the setting of "use QR code" of the printing apparatus 101 is enabled. Then, the control unit 201 transmits this image information to the administrator terminal 103 via the communication unit 203. In the administrator terminal 103, the control unit 301 receives this image information via the communication unit 305. Then, the control unit 301 displays this image information via the display unit 303. In such a case, the administrator can recognize that the setting of "use QR code" of the printing apparatus 101 has been turned ON.

Next, an image that is displayed on the display of the printing apparatus 101 when the setting of "use QR code" in the CPS 102 is changed for the first time, unlike the image shown in FIG. 13, will be described with reference to FIG. 14. For example, as in step S805, the CPU 111 of the printing apparatus 101 receives a change of the setting of "use QR code" from the CPS 102. Then, the CPU 111 does not change the setting of "use QR code" and does not store the change content in the storage 114. The CPU 111 keeps the OFF icon for "use QR code" in the printing apparatus 101 lit up as shown in FIG. 14, and keeps the QR code hidden. Then, the CPU 111 displays a message indicating that the setting of "use QR code" in the CPS 102 has been changed on the operation screen.

### Operations and Effects

The printing system 10 according to the third embodiment provides the same effects as the first embodiment. In addition, according to this disclosure, even if a user attempting to operate the operation screen of the printing apparatus 101 is not an administrator, the user can recognize the change of the setting of "use QR code" in the CPS 102. Thus, due to the user performing an operation to change the setting of "use QR code" in the printing apparatus 101, the inconsistency of "use QR code" between the CPS 102 and the printing apparatus 101 is quickly resolved. This prevents the user from having a misunderstanding regarding whether or not pull printing is possible. Accordingly, the user can print the print target as desired. In addition, if an administrator who has changed the setting of "use QR code" in the CPS 102 forgets to change the setting of "use QR code" in the printing apparatus 101, the administrator can be prompted to change this setting. The same applies to the case where the administrator changes the setting of "use QR code" in the printing apparatus 101 but forgets to change the setting of "use QR code" in the CPS 102. According to this disclosure, the user can reliably print the print target as desired.

### Modifications

The present disclosure is not limited to the above-described embodiment, and various modifications are possible. For example, in the first embodiment, when the setting of "use QR code" in the CPS 102 is changed from OFF to ON, the setting of "use QR code" in the printing apparatus 101 may be automatically and synchronously changed from OFF to ON. However, the OFF icon for "use QR code" displayed on the operation screen of the printing apparatus 101 may remain lit. Then, for example, the administrator may touch the ON icon for "use QR code" on the operation screen of the printing apparatus 101 to cause the QR code to be displayed on the operation screen of the printing apparatus 101 for the first time.

In addition, the change in the setting of "use QR code" transmitted from the CPS 102 to the printing apparatus 101 may be a change in the setting relating to the display of the QR code. That is, a change in the setting of "use QR code" may be a change in the setting of "use cloud print", a change in the registration status, or a change in a combination of these settings. In addition, if the change of the setting of "use cloud print" fails in the CPS 102, information about the failure of the change of setting may be transmitted to the printing apparatus 101 and displayed on the operation screen of the printing apparatus 101.

As another example of step S217, the CPS 102 may include a display and may display the QR code. The client terminal 104 may then capture an image of this QR code via the image capture unit 406, and thereby obtain the printer UUID associated with the QR code.

In addition, the CPS 102 may periodically notify the printing apparatus 101 of the setting of "use QR code" instead of performing notification only when the setting of "use QR code" is changed in the CPS 102. Then, the printing apparatus 101 may determine whether or not the notified setting of "use QR code" is different from the existing setting. If different, the setting of "use QR code" may be changed. The setting of "use QR code" from the printing apparatus 101 to the CPS 102 may be notified periodically in the same manner.

In addition, the code by which the printing apparatus 101 can be identified is not limited to the QR code, and may be replaced with any other two-dimensional code as long as it is a barcode. The QR code may also be a one-dimensional barcode. In addition, the printing apparatus 101 may be identified not only by a barcode but also by the UUID of the printing apparatus 101, the in-house management number of the printing apparatus 101, location information of the printing apparatus 101 on the floor, or the like. These letters, numbers, and the like (an example of "identification information") may be displayed as-is on the operation screen. In addition, a setting icon for a direct print mode and maintenance information for the CPS 102 (examples of "first information" and "second information") may be displayed on the operation screen of the printing apparatus 101, and this information may be synchronized between the printing apparatus 101 and the CPS 102. When the direct print mode is ON or when the CPS 102 is undergoing maintenance, the CPU 111 may not display the QR code on the operation screen.

In addition, in the above embodiment, an example was shown in which the printing apparatus 101 is applied to a pull print service and a direct print service, but the printing apparatus 101 may also be applied to a different network print service using the CPS 102.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An image forming apparatus capable of communicating with a cloud print server system including a cloud print service, the image forming apparatus comprising:
displaying means for displaying a two-dimensional code including identification information by which the image forming apparatus can be identified, and
receiving means for receiving information relating to the two-dimensional code set in the cloud print service,
wherein control of whether or not to display the two-dimensional code is performed based on the information relating to the two-dimensional code, and the two-dimensional code is used by the cloud print server system to identify the image forming apparatus and transmit a saved print job.

2. The image forming apparatus according to claim 1, further comprising:
accepting means for accepting input of first information that is information relating to a display setting of the two-dimensional code, and
controlling means for controlling the displaying means and the accepting means,
wherein in the controlling,
the first information is set using the input,
the set first information is displayed, and
the two-dimensional code is displayed using the set first information.

3. The image forming apparatus according to claim 2,
wherein the information relating to the two-dimensional code to be received is second information, and
in the controlling, if the received second information is set after the first information and the second information and the first information are not consistent, information indicating that the received second information and the first information are not consistent is displayed.

4. The image forming apparatus according to claim 3, further comprising transmitting means for transmitting the set first information to the cloud print service.

5. The image forming apparatus according to any one of claims 1 to 4,
wherein the information relating to the display setting of the two-dimensional code includes information on a setting of use of the two-dimensional code, and
in the controlling, the two-dimensional code is not displayed, regardless of the state of the setting of use of the two-dimensional code if a service relating to pull printing provided by an image forming system including the image forming apparatus and the cloud print service is unavailable.

6. The image forming apparatus according to claim 5,
wherein information on availability of the service includes information on whether use of the service is enabled or disabled.

7. The image forming apparatus according to claim 5 or 6,
wherein information on availability of the service includes information on a registration status of the image forming apparatus to the service.

8. The image forming apparatus according to any one of claims 1 to 7,
wherein the two-dimensional code is a barcode.

9. A method for controlling an image forming apparatus capable of communicating with a cloud print server system including a cloud print service, the method comprising:
displaying a two-dimensional code including identification information by which the image forming apparatus can be identified; and
receiving information relating to the two-dimensional code set in the cloud print service,
wherein control of whether or not to display the two-dimensional code is performed based on the information relating to the two-dimensional code, and the two-dimensional code is used by the cloud print server system to identify the image forming apparatus and transmit a saved print job.

10. A non-transitory computer-readable storage medium storing a program for causing a computer to execute each step of a control method for an image forming apparatus capable of communicating with a cloud print server system including a cloud print service, the control method comprising:
displaying a two-dimensional code including identification information by which the image forming apparatus can be identified; and
receiving information relating to the two-dimensional code set in the cloud print service,
wherein control of whether or not to display the two-dimensional code is performed based on the information relating to the two-dimensional code, and the two-dimensional code is used by the cloud print server system to identify the image forming apparatus and transmit a saved print job.
